# EUROPEAN PATENT SPECIFICATION

(11) **EP 2 803 459 B1**
(45) Date of publication and mention of the grant of the patent: **05.10.2016**
(21) Application number: 13382176.9
(22) Date of filing: 13.05.2013
(51) Int. Cl.: B29B 17/02, B26D 3/00

(54) **Device and method for removing a tread from a tire**
Vorrichtung und Verfahren zur Entfernung der Lauffläche von einem Reifen
Dispositif et procédé pour enlever la bande de roulement d'un pneumatique

(43) Date of publication of application: 19.11.2014
(73) Proprietor: GOMAVIAL SOLUTIONS, S.L., 18100 Armilla, Granada (ES)
(72) Inventor: Romero Marion, Leandro, E-20018 San Sebastian (ES); Ferrón Celma, Pablo, E-20018 San Sebastian (ES); Mateos Torrero, Alexander, E-20018 San Sebastian (ES)
(74) Representative: ABG Patentes, S.L.

(56) References cited:
- WO-A1-2007/097645
- DE-A1- 4 200 949
- US-A1- 2011 023 668
- Gomavial: "Gomavial", youtube.com , 14 February 2013 (2013-02-14), pages 1-3, XP002712221, Retrieved from the Internet: URL:http://www.youtube.com/watch?v=spqWmny 3MsE [retrieved on 2013-09-04]

## Description

### Object of the Invention

The present invention relates to a device for removing a tread from a tire or part of a tire allowing the subsequent use thereof as an independent product in other industries. Another object of the invention is the method which allows establishing suitable pre-cuts and the subsequent removal thereof.

The configuration of the machine allows automated tread removal in a very short time.

The particular configuration of the cutting means allows removing helical cut portions for obtaining longer bands.

### Background of the Invention

Recycling tires disposed of each year is of great importance today since they make up one of the largest wastes in civilized societies. Thus, more than 230,000 tons of worn tires are generated each year in Spain.

At least three main layers must be provided in the tire manufacturing process: the tread band, sometimes also called KM band, formed by textile fibers embedded in rubber or only rubber in truck tires; the metal mesh, formed by a generally oblique framework of wires; and the casing on which the other two layers are arranged. As indicated by the name, the fibers of the casing in radial tires are radial fibers. Depending on the type of vehicle, the tire can contain more than one metal mesh and more than one tread layer. After manufacturing the tire these layers are not distinguished through an inner separation surface but rather are embedded in the rubber and spaced from one another providing different resistance functions to the overall tire performance.

When the outer tread band has lost the groove depth needed for proper traction with the asphalt, the tire is disposed of.

In the state of the art, there are different alternatives for proceeding with these used tires, such as for example:
- Technologies outside material recycling systems, which include recapping, making use of the casing of the tire.
- Mechanical treatments where the tire is ground.
- Size reduction technologies by means of milling which allows obtaining rubber powder. The processes applied can be mechanical processes at room temperature, or cryogenic or wet milling.
- Regeneration technologies: recovering or reclaiming and devulcanizing.
- Other technologies such as pyrolysis and thermolysis.

The most common solutions, for example, are therefore based on completely grinding used tires, subsequently removing their components using complex machines. Said machines follow a grinding process which requires a lot of energy, in addition to using large and expensive magnets for removing the metal mesh scrap.

The main technical problem solved by the present invention is to provide a simple and economical alternative in tire recycling. In the state of the art, a tire is considered a set of materials mixed in a complex manner from which the components thereof are to be reclaimed, searching for ways to separate each component.

The present invention allows obtaining new products from the tire or from a part thereof. It can be interpreted that tire manufacture is an initial manufacturing phase of these new products therefore the steps of the invention themselves complete these initial manufacturing steps until obtaining the desired product.

Document DE4200949A1 discloses the preamble of apparatus claim 1. The document also discloses a method for recovering rubber from used tires.

Document XP002712221 discloses a device for deconstructing tires.

### Description of the Invention

A first aspect of the invention is a machine suitable for removing a tread from a tire or a part thereof. The expressions "or part of a tire" or "or a part thereof" are used because it is possible to have a tire from which a component has been removed such that it still has a circular structure and the tread. The machine according to the invention also allows removing the tread from such element. Throughout this description, the term tire can also be understood as a part thereof.

The machine according to this first inventive aspect comprises:
- *first fixing means adapted for securing the tire and for allowing a turn by rotation of said tire with respect to its main axis,*
- *first driving means adapted for imparting a turn by rotation of the tire with respect to its main axis,*
- *first cutting means adapted for making two perimetral cuts one on either side of the tread of the tire,*
- *second cutting means adapted for making a cut in the tread transverse to the tire giving rise to a flap,*
- *pulling means for pulling the flap, the flap can be obtained by means of the second cutting means, for removing the tread by pulling and ripping.*

The first fixing means are responsible for fixing the tire to the machine. These means allow the tire to rotate around its main axis to enable acting on its entire perimeter, for example, for making pre-cuts. These pre-cuts are cuts that are made on the surface of the tire, with a specific depth, so that during the removal of the tread by pulling, the ripping is guided and limited by these pre-cuts.

The first cutting means are responsible for the perimetral cuts leaving the tread to be removed between them. With these pre-cuts, the tread is still a continuous circular element. A subsequent transverse cut generates a flap giving rise to the start of the band to be removed. This subsequent transverse cut is made through the second cutting means. In a preferred embodiment of the invention, these cutting means act by obliquely penetrating the tread not only to establish the beginning of the band to be removed as it is a transverse cut, but rather to lift a flap when this start of the band begins to be separated from the tire. This cut is made between the layer of nylon cords arranged parallel to the perimeter of the wheel, which are also called a crown belt, and the layers of metal cords forming an angle with the nylon cords. It has been proven that the effective way of removing the tread is when the preceding condition is verified where the nylon cords are on the side of the tread to be removed. The complete removal of the tread is obtained by pulling this flap.
*where the pulling means for pulling the flap comprise:*
- *a rotary drum for winding the removed tread,*
- *second driving means for acting on the rotary drum for removing the tread by pulling,*
*and where the rotary drum has anchoring means therein for fixing the flap.*

The main cause of tread removal efficiency and automation is the means whereby the tread is pulled once the perimetral pre-cuts and the flap are generated.

The device according to the invention comprises a rotary drum for winding the tread which can be operated by means of the second driving means.

There are anchoring means inside the drum. The flap generated in the tread reaches the anchoring means which secure it. Once the flap of the tread is secured, the actuation of the second driving means cause the rotation of the drum. This rotation of the drum pulls the tread which is being gradually torn off the tire or a part thereof. Tearing is a process whereby free surfaces are generated in the slit which progresses as the tread is separated from the rest of the tire. The surface which is generated is laterally limited by the perimetral pre-cuts.

This band generated by tearing is wound on the drum. The drum rotates until the tread has been completely removed.

Once the band has been completely removed, the rotation of the drum in the reverse direction unwinds the band. A platform made up of a plurality of wheels on which the removed tread extends as it unwinds has been included in a preferred example. Once unwound, the anchoring means are released and are ready to carry out the next removal.

Various ways for configuring the machine will be described in greater detail below with the aid of the drawings.

### Description of the Drawings

The foregoing and other features and advantages of the invention will be better understood from the following detailed description of a preferred embodiment provided only by way of non-limiting illustrative example, in reference to the attached drawings.
Figure 1 shows an embodiment of the invention. The perspective view is observed from a slightly lowered position to allow observing the details of the cutting and pulling elements. In this figure, some partitions and protections have been eliminated to observe the inner parts of the machine.
Figure 2 shows the same example as Figure 1. The figure is also a perspective view with the exception that the point of view is located from another side and in a slightly elevated position.
Figure 3 shows the same embodiment as the preceding figures, in a perspective view and the point of view is located at the front. In this figure, the tire and the perimetral cutting elements have been removed to allow observing the first driving means and the fixing means for the tire.
Figure 4 shows a perspective view of an isolated drum which allows pulling and winding the tread.
Figure 5 shows a perspective view of the area of the machine where the first cutting means making the perimetral cuts in the tire are located.
Figure 6 shows a perspective view of the isolated driving means of the tire for rotating same and for making perimetral cuts.
Figure 7 shows a perspective view of the isolated first cutting means which generate the perimetral cuts.
Figure 8 shows a perspective view of the isolated second cutting means which generate the flap.

### Detailed Description of the Invention

According to the first inventive aspect, the present invention relates to a device for removing the tread from a tire (6).

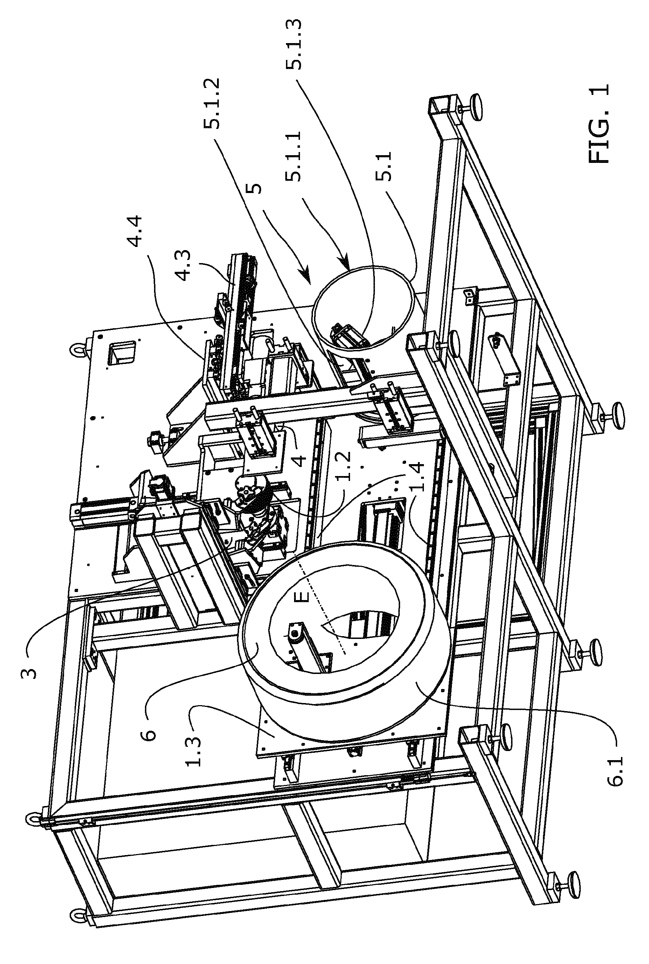

Figure 1 shows an embodiment of the invention according to a first inventive aspect. This figure shows a perspective view of the support structure formed by square-section bars serving as a fixing for each of the components of the machine seen from a point of view located below the plane serving as a support base for the machine. Likewise, for the sake of clarity, protections for the user such as partitions and doors have been eliminated such that the described components can be seen.

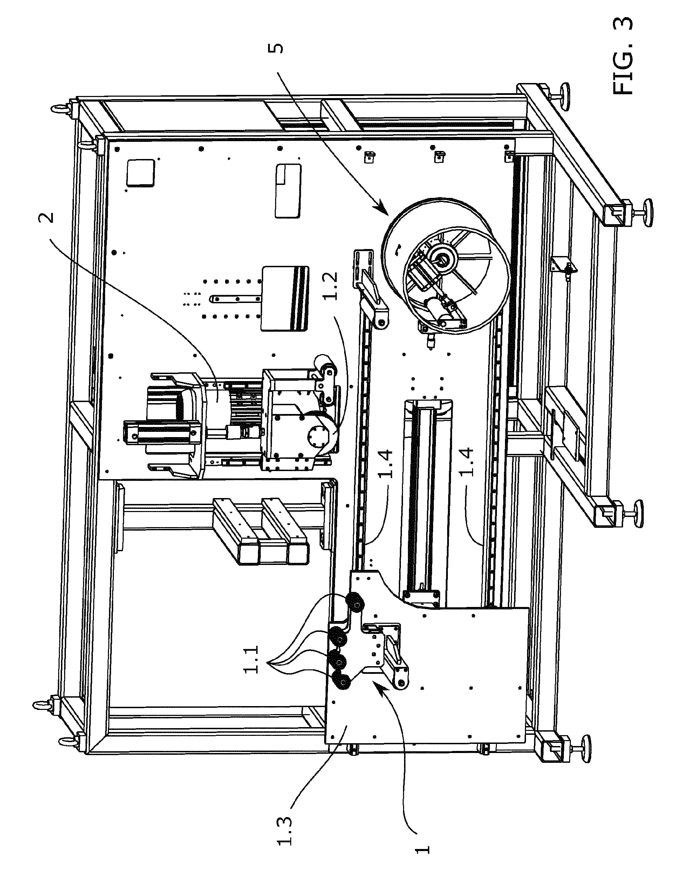

Fixing means (1) on which the tire (6) is supported are located to the left of the machine. These fixing means (1) are more clearly observed in Figure 3 given that the tire (6) has been removed. In this embodiment, the fixing means are formed by a plurality of wheels (1.1) intended for the tire to internally rest thereon and are arranged forming a circular arch section.

The plurality of wheels (1.1) on which the tire (6) rests are free such that the tire (6) can rotate around its main axis (E). Figure 3 shows the plurality of wheels (1.1) located on a plate (1.3) that is linearly movable along several guides (1.4). In this embodiment, the guides are arranged horizontally which allows conveniently placing the tire (6) outside the means acting on the tread (6.1) and the tire (6) can then move closer to the means for removing the tread (6.1) which will be described in greater detail below.

Once the tread (6.1) is removed, the rest of the tire that remains can also move again, moving away from the actuation means for removing the tread (6.1), in this case, moving to the left as shown in the figure, and said rest of the tire (6) can be conveniently removed.

Also following the chosen view in Figures 1 to 3, moving closer to the means for removing the tread (6) is a movement to the right. In this embodiment, the plate (1.3) on which the free wheels (1.1) are fixed slides along its guides (1.4) for moving closer to or away from the means.

Once the tire (6) has moved closer, the tread (6.1) or the outer face of the tire (6) contacts a cogwheel (1.2) leaving the tire (6) trapped between the plurality of free inner wheels (1.1) and said cogwheel (1.2).

The cogwheel (1.2) is operated by a drive motor (2) imparting a rotation to the tire (6) such that the tire (6) rotates with respect to its axis (E).

Although not seen in the drawings due to the small size thereof, ultrasound-based proximity sensors have been arranged in a lower position with respect to the tire (6). Given that the tire is secured in the upper part, the use of tires having a different diameter causes lower points of the tire (6) to be located at a different height. Tires (6) having a greater diameter will have their lower point located in a lower position.

This sensor establishes the lower point reached by the tire (6). By knowing the position of the inner wheels (1.1) it is possible to calculate the diameter of the tire (6) by processing means. Once the diameter of the tire (6) is known, control means acting on the driving means (2) of the cogwheel (1.2) allow establishing the number of times the tire (6) must rotate to achieve a complete turn or the angle at which said tire (6) is to be rotated.

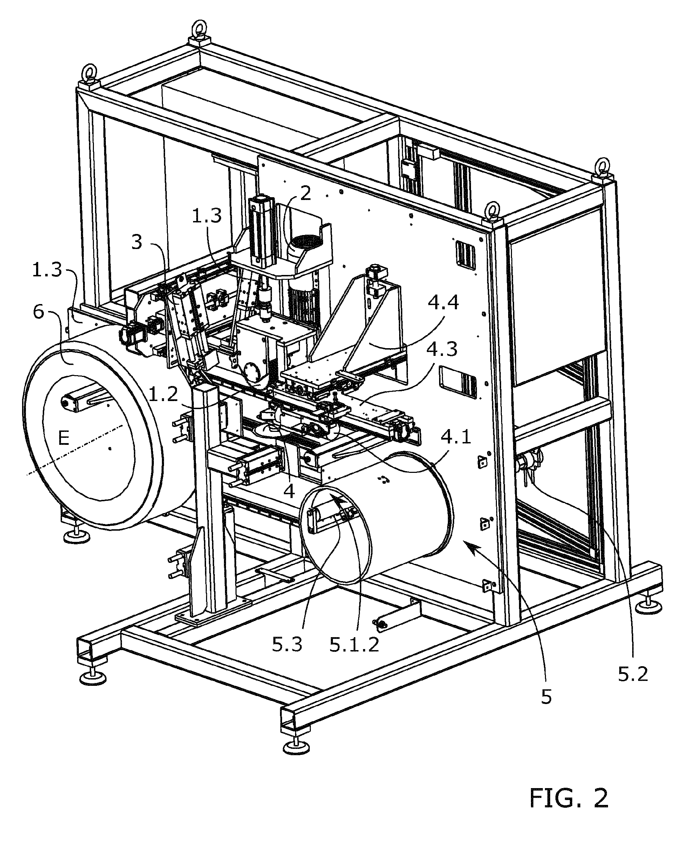

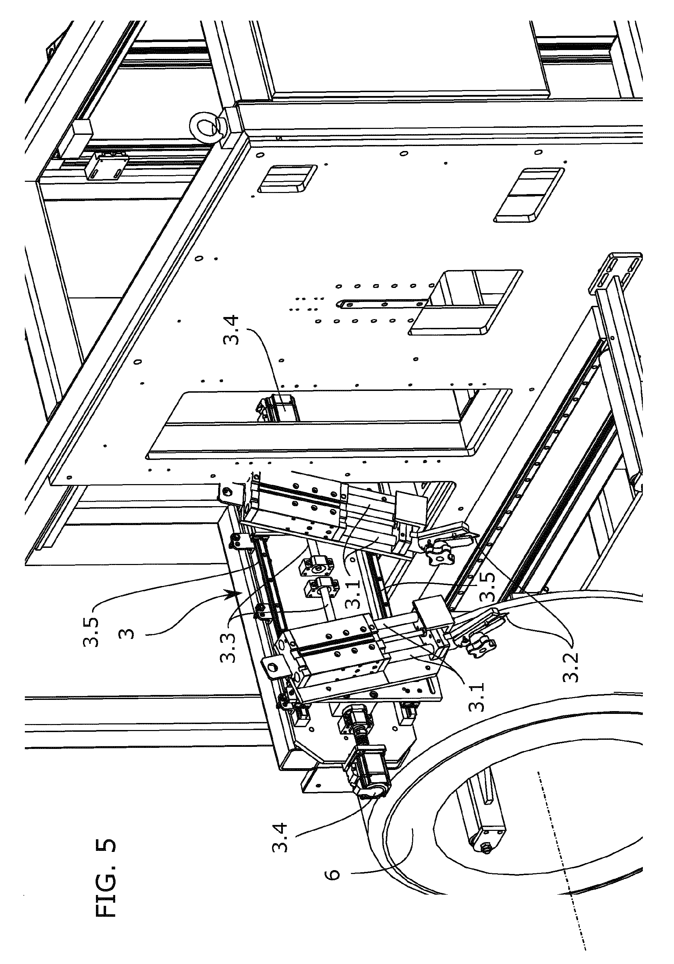

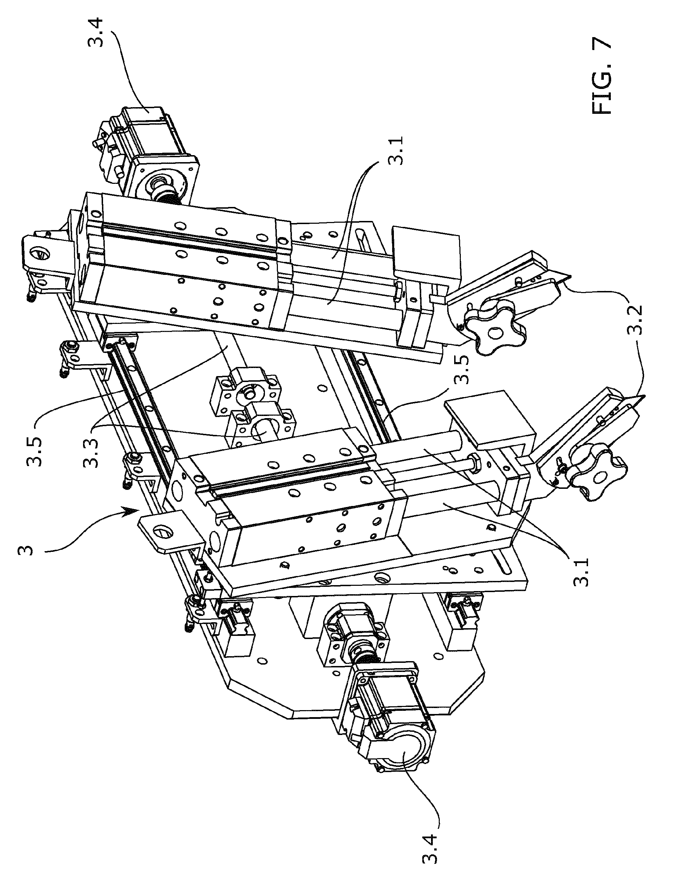

Figures 1 and 2 show the first cutting means (3) responsible for making the perimetral cuts. Figure 3 only shows two support arms for supporting these first cutting means (3) so as to not block other described elements. The first cutting means (3) are observed in detail on the support arms in Figure 5 and in an isolated manner in Figure 7. The points of view of these perspectives coincide with the point of view chosen for Figure 2.

The first cutting means (3) are made up of at least one blade (3.2). In this embodiment, two blades (3.2) are incorporated because the two cuts between which the band to be removed is arranged are obtained in the same rotation of the tire (6). The cut by the first cutting means (3) is obtained by the rotation of the tire (6) by the first driving means (2) and the support of the blade (3.2) against the surface of the tire (6).

As shown in Figure 7, each of the blades (3.2) is fixed to the end of actuation means (3.1) formed by linear actuators in this embodiment. The extension of the linear actuators (3.1) lowers the blades (3.2) so that they rest on the tire (6). Figure 5 shows the position of the tire (6) before being located under the blades (3.2). If the tire (6) moves linearly to the right by means of the guides (1.4) of its fixing means (1), it is then located under the blades (3.2). The extension of the linear actuators (3.1) not only places the blades (3.2) on the tire (6) but rather exerts pressure to favor cutting with the rotation of the tire (6).

The tire (6) has no chamber or inner support throughout its entire surface which prevents deformation when pressure is exerted on the outer surface of the tire (6). This means that the force of the blades (3.2) gives rise to a deformation of the tire (6) while the cut is being made. If the two blades (3.2) demarcating the band to be removed are located parallel to one another, the deformation gives rise to a side surface of said removed band which is inclined and not parallel. For this reason, both the blades (3.2) are shown as being oblique, compensating for the inclination caused by the deformation of the tire (6) while cutting.

In this embodiment, the fixing of the linear actuators (3.1) to their support allows modifying the inclination. These supports are in turn located on linear guides (1.5) arranged transverse to the tire (6); i.e., located parallel to the main axis (E) of the tire (6). The transverse movement of the blades (3.2) allows moving the blades (3.2) transversely. This transverse movement is driven by a motor (3.4) acting on spindles (3.3). It is possible to determine the transverse position of each of the blades (3.2) according to the number of turns of the motor (3.4). Each blade (3.2) has its motor (3.4) and a spindle (3.3) so the movement of each of the blades (3.2) is independent.

The transverse movement of the blades (3.2) allows adjusting the position of each blade (3.2) to the limit of the tread (6.1). The tread limit of tires (6) of different width will be in different transverse positions. Control means acting on the motors (3.4) which act on both spindles (3.3) allow adjusting the position of both blades (3.2).

A second proximity sensor located facing the outer side of the tire (6), the side opposite the side resting on the movable plate (1.3), allows determining the width of the installed tire. The control means which act on the drive motors (3.4) of the spindles (3.3) receive the value measured in the second proximity sensor and determine the position of the blades (3.2).

In this embodiment, each blade (3.2) has its own actuation means for transverse movement. It is possible that only one of the blades (3.2) is capable of moving along the entire width of the tread (6.1).

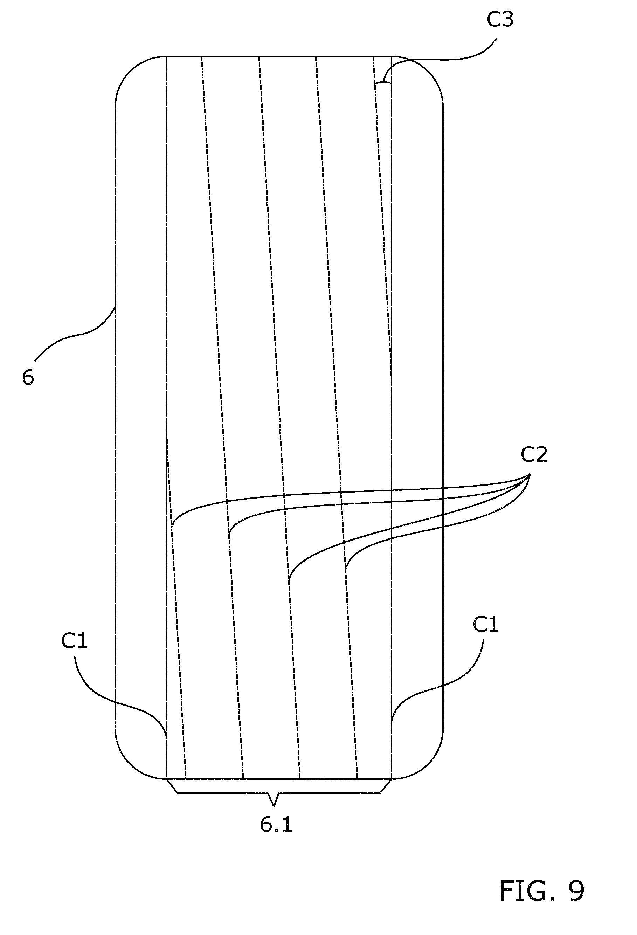

Figure 9 shows an embodiment of a cut made on the tire (6), only a single blade (3.2) being necessary. A removed band which is longer than the perimetral length of the tread (6.1) is further obtained in this example.

The cut shown in this embodiment is made by means of the following steps:
- the diameter of the tire is automatically determined preferably by means of the first proximity sensor,
- the total width of the tire (6) is preferably determined by means of a second sensor,
- a pitch or width of the band to be removed is established,
- the number of turns giving rise to the pitch or width of the band to be removed is calculated with the determined diameter of the tire (6),
- the blade (3.2) is positioned on one side of the tread (6.1) and the tire (6) is rotated to make a first perimetral cut,
- once the perimetral cut is obtained, the blade (3.2) is moved laterally in synch with the rotation of the tire (6) giving rise to a helical cut with the previously determined pitch or width of the band to be removed,
- once the opposite side of the band is reached, a complete groove is made without side movement giving rise to the perimetral cut.

The perimetral cuts obtained with the same blade can be made independently even with the two blades (3.2), nevertheless, the method described above allows obtaining all the necessary perimetral cuts in less time and without stopping the rotation of the tire.

This same Figure 9 shows the cut of the flap (6.1.1). This cut of the flap (6.1.1) does not extend along the entire width of the tread (6.1) but only along the width of the band to be removed, generating a start for tearing.

In Figure 9, the perimetral side cut is depicted by means of continuous line C1, the helical cut is depicted by means of dotted line C2 and the transverse cut giving rise to the flap (6.1.1) is depicted by means of C3.

The band to be removed is torn off in the same manner as the tread (6.1) when only two perimetral side cuts have been made even though it is necessary for the rotary drum (5.1) to make more turns until the entire length is successfully torn off.

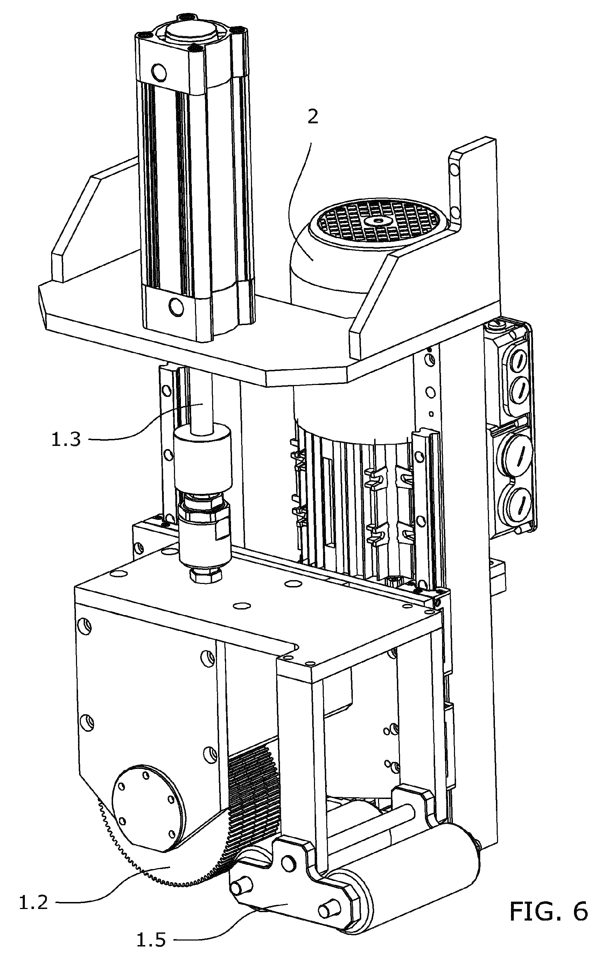

Figure 6 shows the driving means of the tire (6) in an isolated manner. The cogwheel (1.2) is vertically movable by a linear actuator (1.3) such that as it moves closer to the tire (6), the cogwheel (1.2) moves down until it contacts the tire (6). This is how the tire (6) is trapped between the inner wheel or wheels (1.1) and the cogwheel (1.2), giving rise to the fixing means (1) for the tire (6). The drive motor (2) rotates the cogwheel (2) which in turn drives the tire (6). Given that the wheel (1.2) is a cogwheel the grip on the tire (6) which is gradually torn by the movement of the cogwheel (1.2) is favored.

The figure also shows support rollers (1.5) guiding the exit of the tread (6.1) as it is being removed.

Once the flap (6.1.1) and the perimetral pre-cuts (C1) are generated, the band to be removed is pulled on either for removing the entire tread (6.1) or for removing a longer band by means of the additional helical cut (C2).

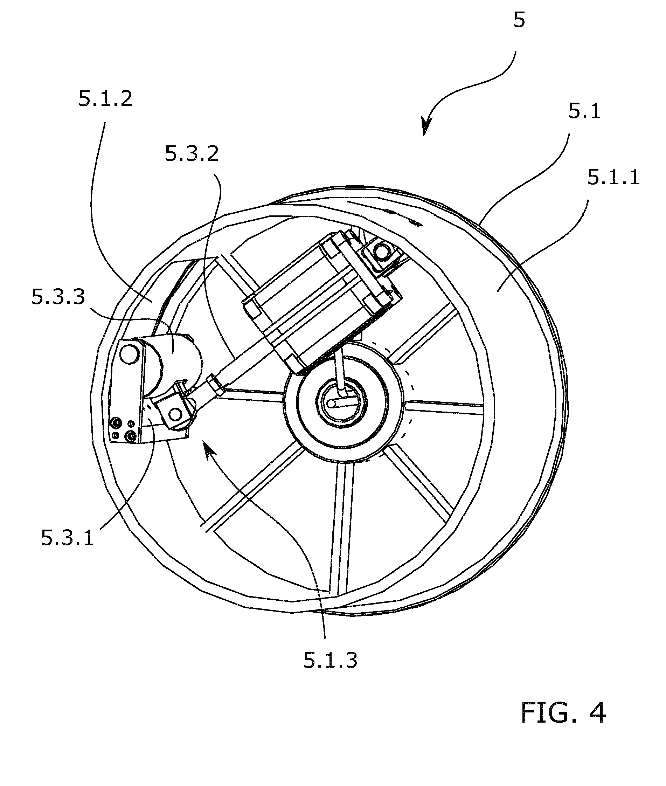

This removal is carried out by means of pulling means (5) formed by a drum (5.1). The pulling means are particularly shown in an isolated manner in Figure 4 and in an operating position in Figures 1, 2 and 3.

The flap (6.1.1) projects from the surface of the tire (6) such that it meets up with the drum (5.1) as the tire rotates clockwise in this embodiment. In this embodiment, the drum (5.1) is formed by a cylindrical surface (5.1.1) housing anchoring means (5.1.3) therein for anchoring the flap (6.1.1). These anchoring means (5.1.3) arranged inside the drum (5.1) are accessible for the flap (6.1.1) by means of a window (5.1.2). If the drum were formed by a plurality of circularly distributed parallel bars spaced from one another, for example, the window (5.1.2) would not be necessary.

As the tire (6) rotates, the flap (6.1.1) abuts with a transverse support (5.3.1) integral with the drum (5.1) which favors the introduction of the flap (6.1.1) into the drum (5.1). A linear actuator (5.3.2) acts on a cylinder with the axis of rotation located close to the periphery such that it is configured as a cam. The movement of the linear actuator (5.3.2) rotates the cam-like cylinder such that it acts as a second support (5.3.3) integral with the moving element of the linear actuator (5.3.2) where the extension of the linear actuator (5.3.2) moves the second support (5.3.3) closer to the first transverse support (5.3.1) trapping and anchoring the flap (6.1.1) of the tread (6.1) for pulling it.

According to another embodiment, the rotation of the moving support can also be achieved with a rotary actuator. According to another embodiment, the anchoring of the flap (6.1.1) can be achieved by using an operable clamp.

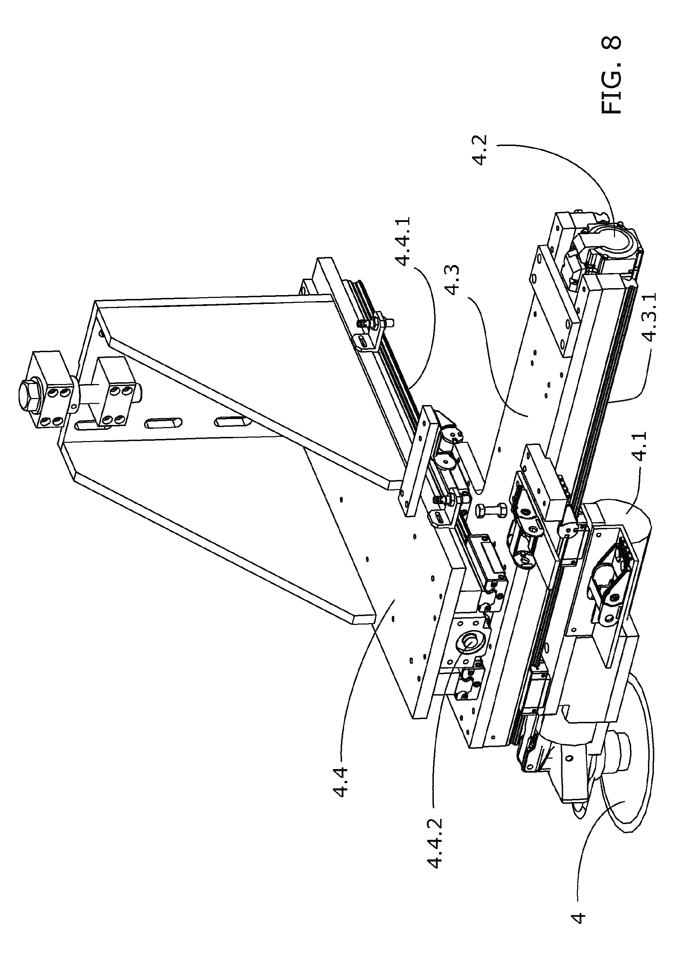

An important element is the device which allows making the transverse cut for obtaining the flap (6.1.1). This device, generically indicated as the second cutting means (4), is shown in its operating position in Figures 1 and 2, and in an isolated manner in Figure 8. The view of Figure 8 corresponds to the point of view used in Figure 2.

According to this embodiment, the second cutting means (4) are made up of a horizontally arranged blade (4) with vibrating capacity. The blade (4) obliquely attacks the tire (6) since it moves in a plane located below the plane tangent to the upper point of the tire (6) and above the mid-plane passing through the main axis (E) of the tire (6). The expression "upper point" is understood as the highest point with respect to the base of the machine.

The movement in the horizontal plane located between the plane tangent to the upper point and to the mid-plane is achieved by means of two degrees of freedom. Figure 8 shows the blade (4) integral with the vibratory actuator (4.1) where both of them are movable along a linear guide (4.3.1) integral with an intermediate support (4.3). The linear movement along this linear guide (4.3.1) is achieved by means of a motor (4.2) determining the position along the linear guide (4.2.1).

The intermediate support (4.3) is in turn movable according to a transverse direction along a second linear guide (4.4.1) integral with a fixed support (4.4) attached to the frame of the machine. This movement is also driven by a motor which acts on a spindle (4.4.2) the end of which is shown in this Figure 8.

The combination of these two movements which are perpendicular to one another allows movement along the horizontal plane. In this embodiment, the linear movement of the blade (4) along the linear guide (4.3.1) integral with the intermediate support (4.3) causes being moved closer to or away from the tread (6.1) of the tire (6). The second movement is transverse to the tire (6). Control means gradually establish transverse movements followed by one or more longitudinal approaching and distancing movements until reaching the inner metal structure of the tire. A flap (6.1.1) is obtained at the end of this combination of movement. If a helical band is chosen, then the cut must be made at the start of the helical band.

## Claims

1. A machine suitable for removing a tread (6.1) from a tire (6), comprising:
- first fixing means (1) adapted for securing the tire (6) and for allowing a turn by rotation of said tire (6) with respect to its main axis (E),
- first driving means (2) adapted for imparting a turn by rotation of the tire (6) with respect to its main axis (E),
- first cutting means (3) adapted for making two perimetral cuts one on either side of the tread (6.1) of the tire (6),
- second cutting means (4) adapted for making a cut in the tread (6.1) transverse to the tire (6) giving rise to a flap (6.1.1),
**characterized in that** the machine further comprises:
- pulling means (5) for pulling the flap (6.1.1), the flap (6.1.1) can be obtained by means of the second cutting means (4), for removing the tread (6.1) by pulling and ripping,
where the pulling means (5) for pulling the flap (6.1.1) comprise:
- a rotary drum (5.1) for winding the removed tread (6),
- second driving means (5.2) for acting on the rotary drum (5.1) for removing the tread (6.1) by pulling,
and where the rotary drum (5.1) has anchoring means (5.3) therein for fixing the flap (6.1.1).

2. The machine according to claim 1, **characterized in that** the rotary drum (5.1) is configured by means of a cylindrical surface (5.1.1), preferably having a circular section, comprising a window (5.1.2) on said surface for the passage of one end of the tread (6.1) with its flap (6.1.1) for fixing the flap (6.1.1) in the anchoring means (5.3) intended for fixing the flap.

3. The machine according to claim 1 or 2, **characterized in that** the anchoring means (5.3) for fixing the flap are made up of:
- a first transverse support (5.3.1) integral with the drum,
- at least one linear actuator (5.3.2); and,
- a second support (5.3.3) integral with the moving element of the linear actuator (5.3.2),
such that the extension of the linear actuator (5.3.2) moves the second support (5.3.3) closer to the first transverse support (5.3.1) trapping and anchoring the flap of the tread for pulling it.

4. The machine according to claim 1 or 2, **characterized in that** the anchoring means (5.3) for fixing the flap are made up of:
- a first transverse support (5.3.1) integral with the drum,
- at least one rotary actuator (5.3.5); and,
- a second support made up of a cam integral with the moving element of the actuator,
such that the rotation of the rotary actuator (5.3.5) by means of the rotation of the cam reduces the distance between the second support and the first transverse support (5.3.1) trapping and anchoring the flap of the tread for pulling it.

5. The machine according to any of the preceding claims, **characterized in that** the fixing means (1) adapted for securing the tire and for allowing a turn by rotation of said tire with respect to its main axis are made up of one or more support wheels (1.1) intended for the inner face of the tire to rest thereon; and a wheel (1.2) intended for resting on the outer face of the tire leaving the tire trapped between the inner wheel or wheels (1.1) and the outer wheel (1.2).

6. The machine according to claim 5, **characterized in that** the driving means adapted for imparting a turn by rotation of the tire with respect to its main axis are made up of a drive motor (2) for driving the wheel (1.2) intended for resting on the outer face of the tire (6) which in turn rests on the inner support wheels (1.1).

7. The machine according to any of the preceding claims, **characterized in that** the second cutting means (3) adapted for making a cut in the tread transverse to the tire giving rise to a flap (6.1.1) are made up of a blade located in a support movable according to two degrees of freedom, a first degree of freedom movable according to the direction transverse to the tread and a second degree of freedom movable in a direction essentially perpendicular to the first degree of freedom for moving the cutting means closer to or away from the tread (6.1).

8. The machine according to any of the preceding claims, **characterized in that** the first cutting means (3) adapted for making two perimetral cuts one on either side of the tread (6.1) of the tire (6) are made up of blades (3.2) integral with actuation means (3.1) adapted for providing at least two positions: a first withdrawn position and a second operating position penetrating the tire (6) for cutting it through the rotation of the tire (6).

9. The machine according to any of the preceding claims, **characterized in that** the first cutting means (3) adapted for making two perimetral cuts one on either side of the tread (6.1) of the tire (6) are made up of blades (3.2) which allow an inclination adjustment with respect to the tread so that the deformation of the tire (6) while cutting results in a side cut surface of the tread that is perpendicular to the main surface of the tread.

10. The machine according to any of the preceding claims, **characterized in that** it comprises at least one sensor for determining the diameter of the wheel, the width of the wheel or both dimensions.

11. The machine according to claim 10, **characterized in that** the sensor for determining the diameter of the wheel, the width of the wheel or both dimensions is an ultrasonic sensor for measuring proximity, located such that it is spaced from the wheel.

12. The machine according to any of the preceding claims, **characterized in that** it has longitudinal cutting means arranged in synch with the first fixing means (1) which are adapted for allowing the turn by rotation of the tire (6) with respect to its main axis (E) such that the longitudinal cutting means move transversely in correspondence with the rotation of the tire (6) to give rise to a helical cut in the tread.

13. The machine according to claim 12, **characterized in that** the synchronous relationship between the longitudinal cutting means and the first fixing means (1) which are adapted for allowing the turn by rotation of the tire is a linear relationship for obtaining a band of constant width.

14. The machine according to any of the preceding claims, particularly according to claim 10 or 11, **characterized in that** it has control means adapted for establishing the number of turns of the tire based on the signal obtained in the sensor for determining the diameter of the tire.

15. A method for obtaining pre-cuts in a machine according to any of the preceding claims, **characterized in that**:
- the diameter of the tire (6) is determined,
- the total width of the tire (6) is determined,
- a pitch or width of the band to be removed is established,
- the number of turns giving rise to the pitch or width of the band to be removed is calculated with the determined diameter of the tire (6),
- the blade (3.2) of the first cutting means (3) is positioned on one side of the tread (6.1) and the tire (6) is rotated to make a first perimetral cut,
- once the perimetral cut is obtained, the blade (3.2) of the first cutting means (3) is moved laterally in synch with the rotation of the tire (6) giving rise to a helical cut with the previously determined pitch or width of the band to be removed,
- a perimetral cut is made at the end of the helical cut.

16. The method according to claim 15, **characterized in that** once the opposite side of the band is reached, the second perimetral cut at the end of the helical cut is made as a continuation of the helical cut, where a complete groove is made without side movement giving rise to the perimetral cut.

17. The method according to claim 15, **characterized in that** the second perimetral cut at the end of the helical cut is made at the same time the first perimetral cut is made by means of a second blade (3.2).

18. The method according to claim 15, **characterized in that** the diameter of the tire (6), the width of the tire (6) or both are determined by means of proximity sensors providing a signal to processing means which determine said dimensions depending on the proximity to the sensor.

19. The method according to claim 15, **characterized in that** the diameter of the tire (6), the width of the tire (6) or both are determined by means of approaching rollers contacting the tire which provide a signal to processing means which determine said dimensions depending on the proximity to the sensor.

## Patentansprüche

1. Maschine, die zum Entfernen einer Lauffläche (6.1) von einem Reifen (6) geeignet ist, mit:
- einer ersten Fixiereinrichtung (1), die angepasst ist, um den Reifen (6) zu sichern und um eine Drehung durch Rotation des Reifens (6) mit Bezug auf dessen Hauptachse (E) zu ermöglichen,
- einer ersten Antriebseinrichtung (2), die angepasst ist, um durch Rotation des Reifens (6) mit Bezug auf dessen Hauptachse (E) eine Drehung zu bewirken,
- einer ersten Schneideinrichtung (3), die angepasst ist, um zwei Umfangsschnitte, einen an jeder Seite der Lauffläche (6.1) des Reifens (6), herzustellen,
- einer zweiten Schneideinrichtung (4), die angepasst ist, um einen Schnitt in der Lauffläche (6.1) quer zum Reifen (6) herzustellen, wobei dadurch die eine Krempe (6.1.1) entsteht,
**dadurch gekennzeichnet, dass** die Maschine des Weiteren umfasst:
- eine Zugeinrichtung (5) zum Ziehen der Krempe (6.1.1), wobei die Krempe (6.1.1) durch die zweite Schneideinrichtung (4) erhalten werden kann, um die Lauffläche (6.1) durch Ziehen und Reißen zu entfernen, wobei die Zugeinrichtung (5) zum Ziehen der Krempe (6.1.1) umfasst:
- eine Drehtrommel (5.1) zum Aufwickeln der entfernten Lauffläche (6),
- eine zweite Antriebseinrichtung (5.2), die auf die Drehtrommel (5.1) wirkt, um die Lauffläche (6.1) durch Ziehen zu entfernen,
und wobei die Drehtrommel (5.1) eine Verankerungstrommel (5.3) darin aufweist, um die Krempe (6.1.1) zu fixieren.

2. Maschine nach Anspruch 1, **dadurch gekennzeichnet, dass** die Drehtrommel (5.1) durch eine zylindrische Oberfläche (5.1.1) vorzugsweise mit einem kreisförmigen Abschnitt konfiguriert ist, der ein Fenster (5.1.2) an der Oberfläche für den Durchlass von einem Ende der Lauffläche (6.1) mit seiner Krempe (6.1.1) umfasst, die für das Fixieren der Krempe (6.1.1) in der Verankerungseinrichtung (5.3) vorgesehen ist.

3. Maschine nach Anspruch 1 oder 2, **dadurch gekennzeichnet, dass** die Verankerungseinrichtung (5.3) zum Fixieren der Krempe aus
- einer ersten Querstütze (5.3.1), die mit der Trommel einstückig ausgebildet ist,
- wenigstens einem linearen Stellelement (5.3.2); und
- einer zweiten Stütze (5.3.3) besteht, die mit dem Bewegungselement des linearen Stellelements (5.3.2) einstückig ausgebildet ist,
so dass die Verlängerung des linearen Stellelements (5.3.2) die zweite Stütze (5.3.3) näher an die erste Querstütze (5.3.1) heranbewegt, wobei die Krempe der Lauffläche eingeklemmt und verankert wird, um sie zu ziehen.

4. Maschine nach Anspruch 1 oder 2, **dadurch gekennzeichnet, dass** die Verankerungseinrichtung (5.3) zum Fixieren der Krempe aus
- einer ersten Querstütze (5.3.1), die mit der Trommel einstückig ausgebildet ist,
- wenigstens einem drehbaren Stellelement (5.3.5); und
- einer zweiten Stütze besteht, die aus einem Nocken besteht, der mit dem Bewegungselement des Stellelements einstückig ausgebildet ist,
so dass die Rotation des drehbaren Stellelements (5.3.5) durch die Rotation des Nockens den Abstand zwischen der zweiten Stütze und der ersten Querstütze (5.3.1) reduziert, wobei die Krempe der Lauffläche eingeklemmt und verankert wird, um sie zu ziehen.

5. Maschine nach einem der vorhergehenden Ansprüche, **dadurch gekennzeichnet, dass** die Fixierungseinrichtung (1), die angepasst ist, um den Reifen zu sichern und um eine Drehung durch Rotation des Reifens mit Bezug auf seine Hauptachse zu ermöglichen, aus einem oder mehreren Stützrädern (1.1), die dafür vorgesehen sind, dass die Innenfläche des Reifens darauf aufliegt, und einem Rad (1.2) besteht, das dafür vorgesehen ist, dass es auf der Außenfläche des Reifens aufliegt, wobei der Reifen zwischen dem inneren Rad oder Rädern (1.1) und dem äußeren Rad (1.2) eingeklemmt bleibt.

6. Maschine nach Anspruch 5, **dadurch gekennzeichnet, dass** die Antriebseinrichtung, die angepasst ist, um durch Rotation des Reifens mit Bezug auf seine Hauptachse eine Drehung zu bewirken, aus einem Antriebsmotor (2) zum Antreiben des Rades (1.2) besteht, das dafür vorgesehen ist, dass es auf der Außenfläche des Reifens (6) aufliegt, der wiederum auf den inneren Stützrädern (1.1) aufliegt.

7. Maschine nach einem der vorhergehenden Ansprüche, **dadurch gekennzeichnet, dass** die zweite Schneideinrichtung (3), die angepasst ist, um einen Schnitt in der Lauffläche quer zum Reifen herzustellen, wodurch eine Krempe (6.1.1) entsteht, aus einer Klinge besteht, die sich in einer Stütze befindet, die gemäß zwei Freiheitsgraden bewegbar ist, wobei ein erster Freiheitsgrad entsprechend der Richtung quer zur Lauffläche bewegbar ist und ein zweiter Freiheitsgrad in einer Richtung im Wesentlichen rechtwinklig zum ersten Freiheitsgrad bewegbar ist, um die Schneideinrichtung näher zu oder weg von der Lauffläche (6.1) zu bewegen.

8. Maschine nach einem der vorhergehenden Ansprüche, **dadurch gekennzeichnet, dass** die erste Schneideinrichtung (3), die angepasst ist, um zwei Umfangsschnitte, einen an jeder Seite der Lauffläche (6.1) des Reifens (6), anzufertigen, aus mit der Betätigungseinrichtung (3.1) einstückig ausgebildeten Klingen (3.2) besteht, die angepasst sind, um wenigstens zwei Positionen bereitzustellen: eine erste zurückgezogene Position und eine zweite Arbeitsposition, die den Reifen (6) durchdringt, um ihn durch die Rotation des Reifens (6) zu schneiden.

9. Maschine nach einem der vorhergehenden Ansprüche, **dadurch gekennzeichnet, dass** die erste Schneideinrichtung (3), die angepasst ist, um zwei Umfangsschnitte an jeder Seite der Lauffläche (6.1) des Reifens (6) herzustellen, aus Klingen (3.2) besteht, die eine Neigungseinstellung mit Bezug auf die Lauffläche ermöglichen, so dass die Verformung des Reifens (6) während des Schneidens zu einer Seitenschnittfläche der Lauffläche führt, die rechtwinklig zur Hauptfläche der Lauffläche liegt.

10. Maschine nach einem der vorhergehenden Ansprüche, **dadurch gekennzeichnet, dass** sie wenigstens einen Sensor zum Bestimmen des Durchmessers des Rades, der Breite des Rades oder beider Maße umfasst.

11. Maschine nach Anspruch 10, **dadurch gekennzeichnet, dass** der Sensor zum Bestimmen des Durchmessers des Rades, der Breite des Rades oder beider Maße ein Ultraschallsensor zum Messen der Nähe ist, der so angeordnet ist, dass er von dem Rad beabstandet ist.

12. Maschine nach einem der vorhergehenden Ansprüche, **dadurch gekennzeichnet, dass** sie eine längsgerichtete Schneideinrichtung aufweist, die synchron mit der ersten Fixiereinrichtung (1) angeordnet ist, die angepasst ist, um eine Drehung durch Rotation des Reifens (6) mit Bezug auf seine Hauptachse (E) zu ermöglichen, so dass sich die längsgerichtete Schneideinrichtung quer in Übereinstimmung mit der Rotation des Reifens (6) bewegt, um einen spiralförmigen Schnitt in der Lauffläche entstehen zu lassen.

13. Maschine nach Anspruch 12, **dadurch gekennzeichnet, dass** die synchrone Beziehung zwischen der längsgerichteten Schneideinrichtung und der ersten Fixiereinrichtung (1), die angepasst ist, um eine Drehung durch Rotation des Reifens zu ermöglichen, eine lineare Beziehung ist, um ein Band mit einer konstanten Breite zu erhalten.

14. Maschine nach einem der vorhergehenden Ansprüche, insbesondere nach Anspruch 10 oder 11, **dadurch gekennzeichnet, dass** sie eine Steuereinrichtung aufweist, die angepasst ist, um die Anzahl von Drehungen des Reifens auf der Basis des Signals zu bilden, das in dem Sensor zum Bestimmen des Durchmessers des Reifens erhalten wurde.

15. Verfahren zum Erhalten von Vorschnitten in einer Maschine nach einem der vorhergehenden Ansprüche, **dadurch gekennzeichnet, dass**:
- der Durchmesser des Reifens (6) bestimmt wird,
- die Gesamtbreite des Reifens (6) bestimmt wird,
- eine Neigung oder Breite des zu entfernenden Bandes gebildet wird,
- die Anzahl der Drehungen, die die Neigung oder Breite des zu entfernenden Bandes entstehen lassen, mit dem bestimmten Durchmesser des Reifens (6) berechnet wird,
- die Klinge (3.2) der ersten Schneideinrichtung (3) an einer Seite der Lauffläche (6.1) positioniert wird, wobei der Reifen (6) gedreht wird, um einen ersten Umfangsschnitt herzustellen,
- sobald der erste Umfangsschnitt erhalten wurde, die Klinge (3.2) der ersten Schneideinrichtung (3) seitlich synchron mit der Rotation des Reifens (6) bewegt wird, wobei ein spiralförmiger Schnitt mit der zuvor bestimmten Neigung oder Breite des zu entfernenden Bandes entsteht,
- ein Umfangsschnitt am Ende des spiralförmigen Schnitts hergestellt wird.

16. Verfahren nach Anspruch 15, **dadurch gekennzeichnet, dass**, sobald die gegenüberliegende Seite des Bandes erreicht ist, der zweite Umfangsschnitt am Ende des spiralförmigen Schnitts als eine Fortführung des spiralförmigen Schnitts hergestellt wird, wo eine vollständige Nut hergestellt wird, ohne dass die Seitenbewegung den Umfangsschnitt entstehen lässt.

17. Verfahren nach Anspruch 15, **dadurch gekennzeichnet, dass** der zweite Umfangsschnitt am Ende des spiralförmigen Schnitts zur gleichen Zeit hergestellt wird, zu der der erste Umfangsschnitt durch die zweite Klinge (3.2) hergestellt wird.

18. Verfahren nach Anspruch 15, **dadurch gekennzeichnet, dass** der Durchmesser des Reifens (6), die Breite des Reifens (6) oder beides durch Näherungssensoren bestimmt werden, die ein Signal für die Verarbeitungseinrichtung bereitstellen, die die Maße abhängig von der Nähe des Sensors bestimmt.

19. Verfahren nach Anspruch 15, **dadurch gekennzeichnet, dass** der Durchmesser des Reifens (6), die Breite des Reifens (6) oder beides durch den Reifen berührende Annäherungsrollen bestimmt werden, die ein Signal für die Verarbeitungseinrichtung bereitstellen, die die Maße abhängig von der Nähe des Sensors bestimmt.

## Revendications

1. Machine appropriée pour retirer une bande de roulement (6.1) d'un pneu (6), comprenant :
- des premiers moyens de fixation (1) adaptés pour fixer le pneu (6) et pour permettre un tour par la rotation dudit pneu (6) par rapport à son axe principal (E),
- des premiers moyens d'entraînement (2) adaptés pour transmettre un tour par la rotation du pneu (6) par rapport à son axe principal (E),
- des premiers moyens de coupe (3) adaptés pour réaliser deux coupes périmétrales, une de chaque côté de la bande de roulement (6.1) du pneu (6),
- des seconds moyens de coupe (4) adaptés pour réaliser une coupe dans la bande de roulement (6.1) transversalement par rapport au pneu (6), provoquant un rabat (6.1.1),
**caractérisée en ce que** la machine comprend en outre :
- des moyens de traction (5) pour tirer le rabat (6.1.1), le rabat (6.1.1) peut être obtenu au moyen des seconds moyens de coupe (4), afin de retirer la bande de roulement (6.1) par traction et par arrachage,
dans laquelle les moyens de traction (5) pour tirer le rabat (6.1.1) comprennent :
- un tambour rotatif (5.1) pour enrouler la bande de roulement (6) retirée,
- des seconds moyens d'entraînement (5.2) pour agir sur le tambour rotatif (5.1) afin de retirer la bande de roulement (6.1) par traction,
et dans laquelle le tambour rotatif (5.1) a des moyens d'ancrage (5.3) à l'intérieur de ce dernier pour fixer le rabat (6.1.1).

2. Machine selon la revendication 1, **caractérisée en ce que** le tambour rotatif (5.1) est configuré au moyen d'une surface cylindrique (5.1.1), ayant de préférence une section circulaire, comprenant une fenêtre (5.1.2) sur ladite surface pour le passage d'une extrémité de la bande de roulement (6.1) avec son rabat (6.1.1) afin de fixer le rabat (6.1.1) dans les moyens d'ancrage (5.3) prévus pour fixer le rabat.

3. Machine selon la revendication 1 ou 2, **caractérisée en ce que** les moyens d'ancrage (5.3) pour fixer le rabat sont composés de :
- un premier support transversal (5.3.1) solidaire avec le tambour,
- au moins un actionneur linéaire (5.3.2) ; et
- un second support (5.3.3) solidaire avec l'élément mobile de l'actionneur linéaire (5.3.2),
de sorte que l'extension de l'actionneur linéaire (5.3.2) rapproche le second support (5.3.3) du premier support transversal (5.3.1) piégeant et ancrant le rabat de la bande de roulement pour le tirer.

4. Machine selon la revendication 1 ou 2, **caractérisée en ce que** les moyens d'ancrage (5.3) pour fixer le rabat sont composés de :
- un premier support transversal (5.3.1) solidaire avec le tambour,
- au moins un actionneur rotatif (5.3.5) ; et
- un second support composé d'une came solidaire avec l'élément mobile de l'actionneur,
de sorte que la rotation de l'actionneur rotatif (5.3.5) au moyen de la rotation de la came réduit la distance entre le second support et le premier support transversal (5.3.1) piégeant et ancrant le rabat de la bande de roulement pour le tirer.

5. Machine selon l'une quelconque des revendications précédentes, **caractérisée en ce que** les moyens de fixation (1) adaptés pour fixer le pneu et pour permettre un tour par la rotation dudit pneu par rapport à son axe principal sont composés d'une ou de plusieurs roues de support (1.1) prévues pour la face interne du pneu afin de d'appuyer sur cette dernière ; et d'une roue (1.2) prévue pour s'appuyer sur la face externe du pneu en laissant le pneu piégé entre la roue ou les roues internes (1.1) et la roue externe (1.2).

6. Machine selon la revendication 5, **caractérisée en ce que** les moyens d'entraînement adaptés pour transmettre un tour par la rotation du pneu par rapport à son axe principal sont composés par un moteur d'entraînement (2) pour entraîner la roue (1.2) prévue pour s'appuyer sur la face externe du pneu (6) qui s'appuie à son tour sur les roues de support internes (1.1).

7. Machine selon l'une quelconque des revendications précédentes, **caractérisée en ce que** les seconds moyens de coupe (3) adaptés pour réaliser une coupe dans la bande de roulement transversalement par rapport au pneu provoquant un rabat (6.1.1) sont composés d'une lame positionnée dans un support mobile selon deux degrés de liberté, un premier degré de liberté mobile selon la direction transversale par rapport à la bande de roulement et un second degré de liberté mobile dans une direction essentiellement perpendiculaire au premier degré de liberté pour rapprocher ou éloigner les moyens de coupe de la bande de roulement (6.1).

8. Machine selon l'une quelconque des revendications précédentes, **caractérisée en ce que** les premiers moyens de coupe (3) adaptés pour réaliser deux coupes périmétrales, une de chaque côté de la bande de roulement (6.1) du pneu (6), sont composés de lames (3.2) solidaires avec les moyens d'actionnement (3.1) adaptés pour fournir au moins deux positions : une première position retirée et une seconde position de fonctionnement pénétrant dans le pneu (6) pour le couper par le biais de la rotation du pneu (6).

9. Machine selon l'une quelconque des revendications précédentes, **caractérisée en ce que** les premiers moyens de coupe (3) adaptés pour réaliser deux coupes périmétrales, une de chaque côté de la bande de roulement (6.1) du pneu (6), sont composés de lames (3.2) qui permettent un ajustement d'inclinaison par rapport à la bande de roulement de sorte que la déformation du pneu (6) lors de la coupe, se traduit par une surface coupée latérale de la bande de roulement qui est perpendiculaire à la surface principale de la bande de roulement.

10. Machine selon l'une quelconque des revendications précédentes, **caractérisée en ce qu'**elle comprend au moins un capteur pour déterminer le diamètre de la roue, la largeur de la roue ou les deux dimensions.

11. Machine selon la revendication 10, **caractérisée en ce que** le capteur pour déterminer le diamètre de la roue, la largeur de la roue ou les deux dimensions est un capteur à ultrasons pour mesurer la proximité, positionné de sorte qu'il est espacé de la roue.

12. Machine selon l'une quelconque des revendications précédentes, **caractérisée en ce qu'**elle a des moyens de coupe longitudinaux agencés en synchronisation avec les premiers moyens de coupe (1) qui sont adaptés pour permettre le tour par la rotation du pneu (6) par rapport à son axe principal (E) de sorte que les moyens de coupe se déplacent transversalement en correspondance avec la rotation du pneu (6) pour provoquer une coupe hélicoïdale dans la bande de roulement.

13. Machine selon la revendication 12, **caractérisée en ce que** la relation synchrone entre les moyens de coupe longitudinaux et les premiers moyens de fixation (1) qui sont adaptés pour permettre le tour par la rotation du pneu est une relation linéaire pour obtenir une bande de largeur constante.

14. Machine selon l'une quelconque des revendications précédentes, en particulier selon la revendication 10 ou 11, **caractérisée en ce qu'**elle a des moyens de commande adaptés pour établir le nombre de tours du pneu en fonction du signal obtenu dans le capteur afin de déterminer le diamètre du pneu.

15. Procédé pour obtenir des pré-coupes dans une machine selon l'une quelconque des revendications précédentes, **caractérisé en ce que** :
- le diamètre du pneu (6) est déterminé,
- la largeur totale du pneu (6) est déterminée,
- un pas ou largeur de la bande à retirer est établi(e),
- le nombre de tours donnant lieu au pas ou à la largeur de la bande à retirer est calculé avec le diamètre déterminé du pneu (6),
- la lame (3.2) des premiers moyens de coupe (3) est positionnée d'un côté de la bande de roulement (6.1) et le pneu (6) est entraîné en rotation pour réaliser une première coupe périmétrale,
- une fois que la coupe périmétrale est obtenue, la lame (3.2) des premiers moyens de coupe (3) est déplacée latéralement en synchronisation avec la rotation du pneu (6) donnant lieu à une coupe hélicoïdale avec le pas ou la largeur préalablement déterminé(e) de la bande à retirer,
- une coupe périmétrale est réalisée à la fin de la coupe hélicoïdale.

16. Procédé selon la revendication 15, **caractérisé en ce qu'**une fois que le côté opposé de la bande est atteint, la seconde coupe périmétrale à la fin de la coupe hélicoïdale est réalisée en tant que continuité de la coupe hélicoïdale, où une rainure complète est réalisée sans le mouvement latéral donnant lieu à la coupe périmétrale.

17. Procédé selon la revendication 15, **caractérisé en ce que** la seconde coupe périmétrale à la fin de la coupe hélicoïdale est réalisée en même temps que la première coupe périmétrale est réalisée au moyen d'une seconde lame (3.2).

18. Procédé selon la revendication 15, **caractérisé en ce que** le diamètre du pneu (6), la largeur du pneu (6) ou les deux sont déterminés au moyen de capteurs de proximité fournissant un signal aux moyens de traitement qui déterminent lesdites dimensions en fonction de la proximité par rapport au capteur.

19. Procédé selon la revendication 15, **caractérisé en ce que** le diamètre du pneu (6), la largeur du pneu (6) ou les deux sont déterminés au moyen de rouleaux d'approche en contact avec le pneu qui fournissent un signal aux moyens de traitement qui déterminent lesdites dimensions en fonction de la proximité par rapport au capteur.
